# EUROPÄISCHE PATENTSCHRIFT

(11) **EP 1 065 673 B1**
(45) Veröffentlichungstag und Bekanntmachung des Hinweises auf die Patenterteilung: **29.09.2004**
(21) Anmeldenummer: 00113772.8
(22) Anmeldetag: 29.06.2000
(51) Int. Cl.: H01B 7/00, G01M 3/18

(54) **Messkabel und flächenförmige Abdichtung mit einer Mehrzahl von daran einseitig oder beidseitig angeordneten Messkabeln**
Measuring cable and plane seal with a plurality of measuring cables arranged on one or both sides
Câble de mesure et étanchement plan avec une pluralité de câbles de mesure placés unilatéralement ou de part et d'autre

(30) Priorität: 29.06.1999 DE 19930545
(43) Veröffentlichungstag der Anmeldung: 03.01.2001
(73) Patentinhaber: Progeo Monitoring GmbH, 14979 Grossbeeren (DE)
(72) Erfinder: Rödel, Andreas, 14532 Kleinmachnow (DE)
(74) Vertreter: COHAUSZ & FLORACK

(56) Entgegenhaltungen:
- EP-A- 0 191 547
- DE-A- 3 622 770

## Beschreibung

Die Erfindung betrifft ein Meßkabel, insbesondere zur Überwachung von flächenförmigen Abdichtungen, zum Beispiel aus flüssigkeitsundurchlässigem Beton oder Kunststoffdichtungsbahnen, mit einer Mehrzahl von gegeneinander isolierten Adern, einem die Adern umschließenden Kabelmantel und einer Mehrzahl von längs des Kabels angeordneten Meßabgriffen, die jeweils mit einer oder mehreren Adern des Kabels elektrisch verbunden sind, sowie eine flächenförmige Abdichtung mit einer Mehrzahl derartiger Meßkabel.

Die Dichtheitsüberwachung von Großflächenabdichtungen im Hochund Tiefbau erfolgt zunehmend mittels elektro-resistiver Meßverfahren. Kennzeichnend für diese Verfahren ist, daß oberhalb und/oder unterhalb der zu überwachenden Abdichtungen eine Vielzahl von Meßpunkten angeordnet werden, die über geeignete Verbindungsleitungen mit einer Meß- und Auswerteeinheit verbunden werden. Mit der Meß- und Auswerteeinheit wird dann die Potentialverteilung oberhalb und/oder unterhalb der Abdichtung gemessen, so daß anhand der gemessenen Potentialverteilung Leckagen in der Dichtung erkannt und in ihrer Lage geortet werden können.

Die Anordnung der Meßpunkte erfolgt dabei vorzugsweise in einem vorher festgelegten Raster, wobei bei großen Abdichtungen mehrere hundert, teilweise bis zu mehrere tausend Meßpunkte erforderlich sind. Für eine dauerhafte Anwendung des Überwachungsverfahrens ist es erforderlich, daß die Meßpunkte elektrisch gut an das umgebende Erdreich ankoppeln und zusammen mit den Verbindungsleitungen dauerhaft gegen mechanische und chemische Einwirkungen des Erdreichs und die Beanspruchungen während des Einbaus beständig sind. Zur Erreichung dieses Zieles werden nach derzeitigem Stand der Technik zwei grundsätzliche Verkabelungsverfahren angewendet.

Beim ersten Verfahren wird jeder einzelne Meßpunkt mit einem einadrigen Kabel direkt mit der Meß- und Auswerteeinheit oder einem außerhalb der zu überwachenden Abdichtung angeordneten Aufschaltepunkt verbunden. In der Regel werden hierzu vergleichsweise dünne einadrige Leitungen eingesetzt, wobei als Meßpunkt entweder metallische oder keramische Elektroden oder Elektroden aus leitfähigen Kunststoffen eingesetzt werden. Dieses Verfahren ist gekennzeichnet durch einen hohen Verlegeaufwand, weil jeder Anschlußpunkt einzeln verkabelt werden muß, weiterhin ist bei diesem Verfahren nachteilig, daß die Kabel nur über eine vergleichsweise geringe Festigkeit verfügen, aus Kostengründen meist nicht doppelt gemantelt ausgeführt werden und in der Gesamtheit aller verlegten Kabel über eine große spezifische Oberfläche verfügen, über die potentiell eine mechanische oder chemische Schädigung erfolgen kann.

Ein unter dem Gesichtspunkt der Verarbeitung und Betriebssicherheit deutlich besseres Verfahren besteht darin, die einzelnen Meßpunkte entlang von Sammelleitungen anzuordnen, wobei hier als Verbindungsleitungen mehradrige Kabel eingesetzt werden, bei denen in vorgegebenen Abständen jeweils ein Anschluß herausgeführt wird. Diese Sammelleitungen können dann mit nur geringem zusätzlichen Aufwand als robuste, doppelt gemantelte Leitungen ausgeführt werden und sind dementsprechend beständig gegen mechanische und chemische Einwirkungen. Sie sind einfach zu verlegen, weil anstelle vieler Einzeladern nur eine Leitung entlang einer Trasse verlegt wird, die Dokumentation der Verlegung ist dabei ebenfalls einfach und sicher zu handhaben. Nach bisherigem Stand der Technik werden als Elektroden bei diesem Verfahren meist Stränge aus Carbonfaser-Kohlenstoff eingesetzt, die mit Hilfe von wärmeschrumpfenden Muffen an die Sammelleitungen angeschlossen werden. Die Herstellung dieser Muffen ist dabei sehr aufwendig und wird bis heute überwiegend in Handarbeit ausgeführt.

Aufgabe der vorliegenden Erfindung ist es, ein Meßkabel der eingangs genannten Art zur Verfügung zu stellen, das über die Vorteile der Sammelleitung verfügt, aber mit deutlich geringerem Aufwand weitgehend automatisiert herstellbar ist. Ferner soll eine flächenförmige Abdichtung bereitgestellt werden, die mit einer Vielzahl kostengünstig hergestellter Meßpunkte versehen ist.

Diese Aufgabe wird hinsichtlich des Meßkabels erfindungsgemäß dadurch gelöst, daß die Meßabgriffe als leitfähige Kontakte ausgebildet sind, die jeweils vom Kabelmantel umgeben sind, wobei der Kabelmantel aus einem elektrisch leitfähigen Material gebildet ist und die Leitfähigkeit und die Wanddicke des Kabelmantels aufeinander so abgestimmt sind, daß der elektrische Widerstand von den Kontakten in ein das Kabel umgebendes Medium jeweils deutlich kleiner ist als der elektrische Widerstand zwischen den Kontakten längs des Kabels.

Das erfindungsgemäße Meßkabel stellt ein Multi-Elektrodenkabel dar, das deutlich einfacher hergestellt werden kann als bisherige Sammelleitungen. Das erfindungsgemäße Meßkabel hat darüber hinaus den Vorteil, keine Füge- oder Anschlußstellen im Mantel aufzuweisen, so daß es über seine gesamte Länge über gleichmäßig gute Eigenschaften verfügt.

Eine vorteilhafte Ausgestaltung des erfindungsgemäßen Meßkabels besteht darin, daß seine leitfähigen Kontakte jeweils aus einer leitfähigen Metallfolie gebildet sind. Die Kontakte können somit dicht anliegend und praktisch ohne nennenswerte Erhebung auf der Isolierung der Adern angebracht werden, so daß die Adern einschließlich der leitfähigen Kontakte anschließend problemlos mit einem Kabelmantel aus einem elektrisch leitfähigen Material umschlossen werden können. Das erfindungsgemäße Kabel weist somit über seine Länge eine im wesentlichen gleichmäßige Querschnittsfläche auf.

Ferner ist es vorteilhaft, wenn die zur Herstellung der leitfähigen Kontakte verwendete Metallfolie eine Klebebeschichtung aufweist. Hierdurch wird die Herstellung der leitfähigen Kontakte erheblich erleichtert.

Eine andere vorteilhafte Ausgestaltung des erfindungsgemäßen Meßkabels besteht darin, daß der Kabelmantel aus leitfähigem Kunststoff, z.B. leitfähigem Polyethylen, hergestellt ist. Ein derartiges Meßkabel weist eine besonders hohe Beständigkeit gegenüber mechanischen und chemischen Einwirkungen des das Kabel umgebenden Mediums auf.

Hinsichtlich der flächenförmigen Abdichtung besteht die Lösung der vorgenannten Aufgabenstellung in den Merkmalen des Anspruchs 5.

Nachfolgend wir die Erfindung anhand einer ein Ausführungsbeispiel darstellenden Zeichnung näher erläutert. Es zeigen:
- Fig. 1: eine Schnittansicht durch eine flächenförmige Abdichtung mit daran angeordneten Meßkablen und
- Fig. 2: eine perspektivische Ansicht eines teilweise aufgeschnittenen erfindungsgemäßen Meßkabels.

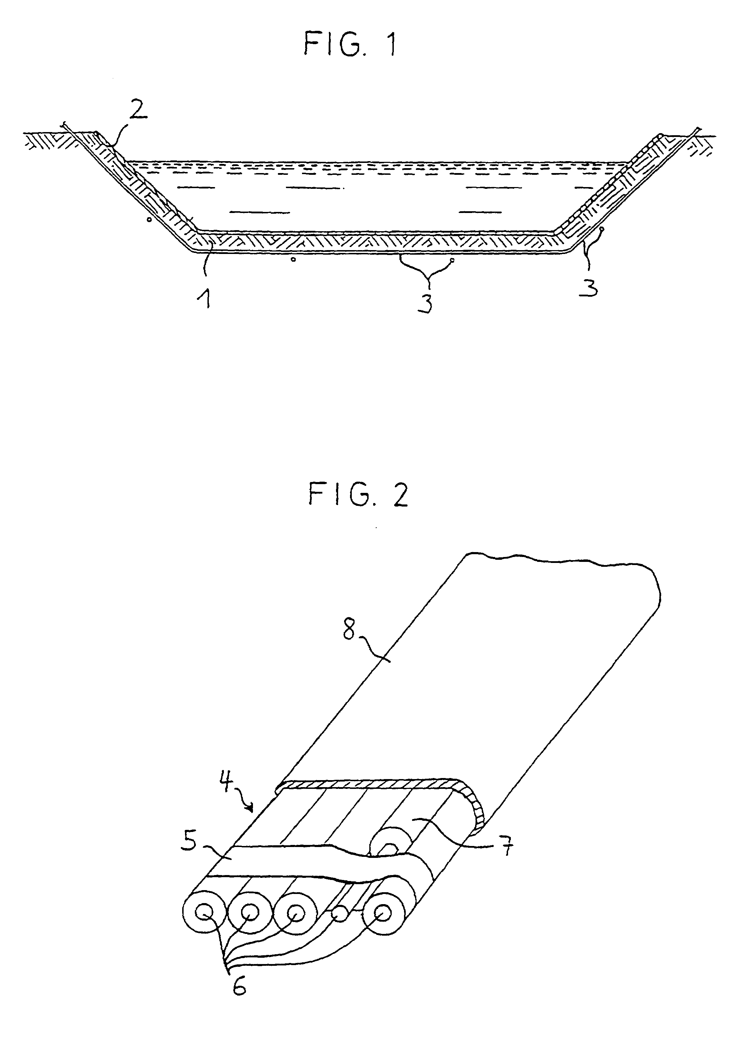

In Fig. 1 ist ein Abwasserteich dargestellt, der gegenüber dem umgebenden Erdreich 1 durch eine flächenförmige Abdichtung 2, beispielsweise eine Abdichtungsfolie aus Kunststoff oder Bitumenpappe abgedichtet ist. An der Unterseite der Abdichtung ist eine Mehrzahl erfindungsgemäßer Meßkabel 3 angeordnet. Die Meßkabel 3 verlaufen zueinander parallel bzw. kreuzen einander, so daß sich ein aus Rechtecken bestehendes Raster ergibt. Die Meßkabel 3 sind jeweils an mindestens einem Ende mit einer Meßeinrichtung (nicht gezeigt) verbunden, die im einfachsten Fall aus einer Spannungsquelle und einem Strommeßgerät sowie einer Schalteinrichtung besteht, mit der die einzelnen Meßkabel 3 nacheinander an die Spannungsquelle angeschlossen werden können, so daß Paare oder Gruppen von nachstehend beschriebenen Meßabgriffen in Form von elektrisch leitfähigen Kontaktstreifen bezüglich ihres elektrischen Widerstandswertes ausgemessen werden können. Die Meßkabel 3 können entgegen dem in Fig. 1 dargestellten Ausführungsbeispiel auch unmittelbar an einer flächenförmigen Abdichtung angebracht sein.

Da großflächige Abdichtungsfolien nicht einstückig hergestellt werden können, ist es üblich, sie aus Bahnen zusammenzusetzen. In einem solchen Fall verläuft ein Teil der Meßkabel 3 zweckmäßigerweise in Bahnlängsrichtung, wobei dieser Teil der Meßkabel 3 bereits bei der Produktion der Abdichtungsbahn auf die Abdichtungsbahn aufgebracht werden kann.

Nachfolgend wird der Aufbau und die Herstellung des erfindungsgemäßen Meßkabels 3 mit Bezug auf Fig. 2 näher beschrieben.

Ausgangspunkt ist ein zunächst ungemanteltes mehradriges Kabel 4. Dieses Kabel 4 wird im Zuge des Herstellungsprozesses in vorgegebenen Abständen mit leitfähigen Kontakten 5, z.B. mit selbstklebenden Metallfoliestreifen versehen, wobei jeder Kontaktstreifen 5 mit einer einzelnen Ader 6 der Sammelleitung elektrisch leitend verbunden wird. In dem dargestellten Ausführungsbeispiel ist die Isolierung 7 der betreffenden Ader 6 teilweise entfernt und der Kontaktstreifen 5 mit der Ader 6 durch Anlöten verbunden worden. Die Abstände zwischen den Kontaktstreifen 5 können beispielsweise 5 m betragen.

Nachdem das gesamte Kabel mit Kontaktstreifen 5 ausgerüstet worden ist, wird in einem zweiten Arbeitsschritt das Kabel mit einem Kabelmantel 8 aus leitfähigem Mantelwerkstoff (z.B. leitfähigem Polyethylen) umgeben. Hierbei wird die Leitfähigkeit des Mantelwerkstoffs und die Manteldicke so abgestimmt, daß bei späterer Verlegung des Kabels 3 im Erdreich 1 der Durchtrittswiderstand der unterhalb des Mantelwerkstoffs angeordneten Kontaktstreifen 5 durch den leitfähigen Mantel 8 hindurch in das Erdreich 1 gering ist im Verhältnis zur Leitfähigkeit des Mantels 8 zwischen benachbarten Meßpunkten (d.h. Kontaktstreifen) auf der Leitung, so daß die für die Messung mit dem Kabel erforderliche punktuelle Ankopplung der Meßpunkte erreicht wird, obwohl der Mantelwerkstoff in Kabellängsrichtung einheitlich elektrisch leitend ist.

Die Erfindung beschränkt sich in ihrer Ausführung nicht auf das vorstehend beschriebene Ausführungsbeispiel. Vielmehr ist eine Anzahl von Varianten denkbar, die auch bei abweichender Gestaltung von der in den Ansprüchen definierten Erfindung Gebrauch machen. So kann das erfindungsgemäße Meßkabel nicht nur als Flachkabel, sondern gegebenenfalls auch als Rundkabel ausgebildet werden. Ebenso kann die elektrische Verbindung zwischen den Kontaktstreifen 6 und den Adern 6 des Meßkabels 3 nicht nur durch Anlöten, sondern auch durch andere geeignete Verbindungsverfahren, beispielsweise durch Crimpen oder durch Umwickeln der abisolierten Adernbereiche hergestellt werden.

## Patentansprüche

1. Meßkabel, insbesondere zur Überwachung von flächenförmigen Abdichtungen, mit einer Mehrzahl von gegeneinander isolierten Adern (6), einem die Adern (6) umschließenden Kabelmantel (8) und einer Mehrzahl von längs des Kabels angeordneten Meßabgriffen, die jeweils mit einer oder mehreren Adern (6) des Kabels elektrisch verbunden sind,
**dadurch gekennzeichnet, daß** die Meßabgriffe als leitfähige Kontakte (5) ausgebildet sind, die jeweils vom Kabelmantel (8) umgeben sind, wobei der Kabelmantel (8) aus einem elektrisch leitfähigen Material gebildet ist und die Leitfähigkeit und die Wanddicke des Kabelmantels (8) aufeinander so abgestimmt sind, daß der elektrische Widerstand von den Kontakten (5) in ein das Kabel umgebendes Medium (1) jeweils deutlich kleiner ist als der elektrische Widerstand zwischen den Kontakten (5) längs des Kabels.

2. Meßkabel nach Anspruch 1,
**dadurch gekennzeichnet, daß** die leitfähigen Kontakte (5) jeweils aus einer leitfähigen Metallfolie gebildet sind.

3. Meßkabel nach Anspruch 2,
**dadurch gekennzeichnet, daß** die Metallfolie eine Klebebeschichtung aufweist.

4. Meßkabel nach einem der Ansprüche 1 bis 3,
**dadurch gekennzeichnet, daß** der Kabelmantel (8) aus leitfähigem Kunststoff hergestellt ist.

5. Flächenförmige Abdichtung (2) mit einer Mehrzahl von daran einseitig oder beidseitig unmittelbar und/oder mit Abstand angeordneten Meßkabeln (3) gemäß einem der Ansprüche 1 bis 4.

## Claims

1. A measuring cable, in particular, for monitoring planiform seals, with a plurality of wires (6) that are insulated against each other, a cable sheath (8) that surrounds the wires (6) and a plurality of measuring taps that are arranged along the cable, wherein the measuring taps are respectively connected to one or more wires (6) of the cable, **characterized in that** the measuring taps are realized in the form of conductive contacts (5) that are respectively surrounded by the cable sheath (8), wherein the cable sheath (8) is manufactured from an electrically conductive material and the conductivity and the wall thickness of the cable sheath (8) are adapted to one another in such a way that the electrical resistance of the contacts (5) in a medium (1) surrounding the cable respectively is much lower than the electrical resistance between the contacts (5) along the cable.

2. The measuring cable according to Claim 1, **characterized in that** the conductive contacts (5) are respectively manufactured from a conductive metal foil.

3. The measuring cable according to Claim 2, **characterized in that** the metal foil contains an adhesive coating.

4. The measuring cable according to one of Claims 1-3, **characterized in that** the cable sheath (8) is manufactured from conductive plastic.

5. A planiform seal (2) with a plurality of measuring cables (3) according to one of Claims 1-4 arranged on one or both sides thereof, wherein the measuring cables are arranged directly on the planiform seal and/or spaced apart therefrom.

## Revendications

1. Câble de mesure, notamment pour la surveillance de étanchements planiformes, avec une pluralité de brins (6) isolés les uns par rapport aux autres, une gaine de câble (8) entourant les brins (6) et une pluralité de prises de mesure disposées sur la longueur du câble, qui sont chaque fois reliées électriquement à un ou plusieurs brins (6) du câble, **caractérisé en ce que** les prises de mesure sont formées comme des contacts conducteurs (5), tous étant entourés de la gaine de câble (8), la gaine de câble (8) étant réalisée dans un matériau conducteur et **en ce que** la conductibilité et l'épaisseur de paroi de la gaine de câble (8) sont ajustées l'une à l'autre de sorte que la résistance électrique des contacts (5) dans un milieu (1) environnant le câble est à chaque fois nettement inférieure à la résistance électrique entre les contacts (5) le long du câble.

2. Câble de mesure selon la revendication 1, **caractérisé en ce que** chaque contact conducteur (5) est formé par un film métallique conducteur.

3. Câble de mesure selon la revendication 2, **caractérisé en ce que** le film métallique possède un revêtement collant.

4. Câble de mesure selon l'une des revendications 1 à 3, **caractérisé en ce que** la gaine du câble (8) est constituée d'une matière synthétique conductrice.

5. Étanchement planiforme (2) avec une pluralité de câbles de mesure (3) selon l'une des revendications 1 à 4 disposés sur celui-ci, d'un côté ou des deux côtés, immédiatement et/ou à distance.
